## Europäisches Patentamt

## European Patent Office

## Office européen des brevets

(11) Publication number: **0 157 301**
**B1**

## (12) EUROPEAN PATENT SPECIFICATION

(45) Date of publication of patent specification: **27.07.88**

(51) Int. Cl.⁴: **F 16 D 3/84**

(21) Application number: **85103313.4**

(22) Date of filing: **21.03.85**

(54) Boot for universal joint.

(30) Priority: **24.03.84 JP 56534/84**

(43) Date of publication of application:
**09.10.85 Bulletin 85/41**

(45) Publication of the grant of the patent:
**27.07.88 Bulletin 88/30**

(84) Designated Contracting States:
**DE FR GB**

(56) References cited:
**EP-A-0 113 271**
**FR-A-2 257 042**

(73) Proprietor: **TOYOTA JIDOSHA KABUSHIKI KAISHA**
**1, Toyota-cho Toyota-shi**
**Aichi-ken 471 (JP)**

(73) Proprietor: **TOYODA GOSEI CO., LTD.**
**1, Aza-Nagahata Ohaza-Ochiai Haruhimura Nishikasugai-gun Aichi-ken (JP)**

(72) Inventor: **Ukai, Mikio**
**91, 1-chome, Kifune Meito-ku**
**Nagoya-shi Aichi-ken (JP)**
Inventor: **Okumoto, Ryouji**
**1586, Aza-Higashisteigai Ohaza-Yotsunuki Sobue-cho**
**Nakashima-gun Aichi-ken (JP)**

(74) Representative: **Grams, Klaus Dieter, Dipl.-Ing. et al**
**Patentanwaltsbüro Tiedtke-Bühling-Kinne-Grupe-Pellmann-Grams-Struif Bavariaring 4 D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 157 301 B1

## Description

The present invention relates to a boot for a universal joint according to the pre-characterizing portion of claim 1.

FR—A—2 257 042 discloses a boot for a universal joint, the bellows of which are formed by three successive ridges, with one end of the bellows being formed by a larger ring portion and the other end being formed by a smaller ring portion. The boot is designed to safeguard a hermetic sealing even at the intersection of the two drive units connected with each other via the universal joint.

In order to guarantee a sufficient ductility in the case of the known boot, the crest of the first ridge adjacent to the larger ring portion projects relatively far in radial direction over the larger ring portion sealing the drive unit. Therefore a relatively large space is required. Moreover, between the first ridge and the second ridge a relatively large conical section of the bellows is provided for, which reduces the ductility of the bellows and consequently likewise brings about an increased space requirement.

The subject matter of the invention is based on the problem to further develop the generic boot in such a way that with less space requirement an increased ductility of the boot can be attained.

According to the invention this problem is solved by the features contained in the characterizing portion of claim 1. The design of the valley in connection with the shorter portion of the bellows disposed between the first and the second ridge permits a radially less projecting design of the first ridge and moreover safeguards the full exploitation of the valley portion between the larger ring portion and the first ridge for the ductility of the bellows. The dimensions and the relative arrangement of the ridges to each other guarantee that, in case the second ridge happens to touch the first ridge, abrasion, if any, occurs to a small extent only.

Advantageous modifications of the invention derive from the subclaims.

In the following the invention is explained by means of an embodiment referring to the drawings, in which:

Fig. 1 is a half-sectional view showing a boot according to one embodiment of the present invention; and

Fig. 2 is an X-ray perspective view showing the boot of Fig. 1 when the output shaft intersects.

The high-molecular elastomer, i.e., the material for making the boot of the present invention is exemplified by rubber as NR, NBR, SBR, BR or CR and TEP of urethane, vinyl, polyester or olefin. The molding method resorts to the ordinary blowing process.

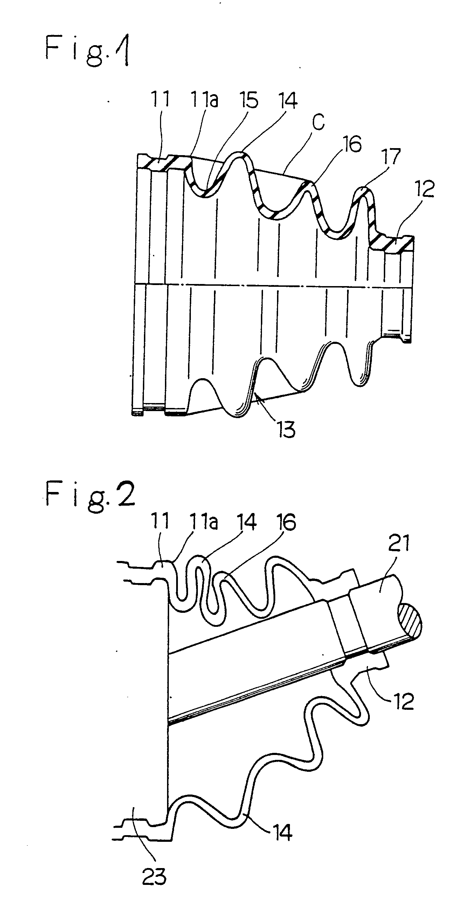

The boot of the present invention is constructed such that a valley 15 is formed between a larger ring portion 11 disposed on a universal joint 23 and a first ridge 14 of a bellows 13 extending between the larger ring portion 11 and a smaller ring portion 12, disposed on an output shaft 21 as shown in Fig. 2. Incidentally, the number or ridges should not be limited to the three, as shown, but may be four or five.

The crest of the first ridge 14 has its inner circumference located outside of the imaginary circumference of the frustrum of a cone C, which is formed by joining the end portion (or the shoulder) 11a of the larger ring portion 11 at the side to be connected to the bellows 13 and the crest of a second ridge 16. The maximum diameter of the inner circumference of that crest is naturally regulated in the allowed occupying space of the boot. By regulating the diameter of the inner circumference of the crest of the first ridge 14, thus, the crest of the first ridge 14 is not sandwiched at the bellows contracting side between the crest of the second ridge 16 and the shoulder 11a of the larger ring portion 11, as shown in Fig. 2, so that the wears of the respective ridges (14, 16) by their mutual contacts are not promoted despite the radius of curvature of the first ridge 14 is enlarged. The radius of curvature of the crest of the first ridge 14 is made larger than that of the second ridge 16. A third ridge 17 may have a larger radius of curvature than that of the second ridge 16 by may preferably be smaller because the pitch between the first ridge 14 and the second ridge 16 can be made larger. Thanks to the construction in which the radius of curvature of the first ridge 14 is made larger than that of the second ridge 16, the strain to be generated at the first ridge 14 at the bellows extending side when the output shaft 21 intersects, as shown in Fig. 2, is reduced to make it reluctant to promote the bending fatigue of the first ridge.

Incidentally, the boot (made of CR) of Fig. 1 was subjected to durability tests (for three samples, respectively) under the following conditions. The test results are enumerated in the Table. It is understood from the Table that the boot of the present invention has a good durability.

Test Conditions:
Maximum Intersection Angle: 40°;
Speed of Revolution: 300 r.p.m.; and
Ambient Temperature: 100°C.

### TABLE

|  | Durability Time (Judged from Leakage of Grease) | | |
| --- | --- | --- | --- |
| Boot (Fig. 1) | 50 hr. | 51 hr. | 51 hr. |

## Claims

1. A boot for a universal joint, wherein bellows (13) having at least three ridges (14, 16, 17) are extended between a larger ring portion (11) and a smaller ring portion (12), wherein a valley (15) is formed between said larger ring portion (11) and the adjacent first ridge (14) of said bellows (13), and wherein the crest of said first ridge (14) has its inner circumference located outside of the imaginary circumference of the frustum of a cone (C), which is formed by joining the end portion (11a) of said larger ring portion (11) at the side connected to said bellows (13) and the crest of the second ridge (16), characterized in that the external diameter of said valley (15) between said first ridge (14) and said larger ring portion (11) is smaller than the internal diameter of said larger ring portion (11) and that the distance between the crests of said first and second ridge (14, 16) is so short as to bring their mutual contacts during intersections of the output shaft (21), said bellows (13) being made of a high-molecular elastomer.

2. A boot for a universal joint according to Claim 1, wherein the crest of said first ridge (14) has a larger radius of curvature than that of said second ridge (16).

3. A boot for a universal joint according to Claim 2, wherein the crest of said third ridge (17) has a smaller radius of curvature than that of said second ridge (16).

## Patentansprüche

1. Schutzkappe für Universalgelenk, bei der sich ein Balg (13) mit zumindest drei Wülsten (14, 16, 17) zwischen einem größeren Ringabschnitt (11) und einem kleineren Ringabschnitt (12) erstreckt, bei der zwischen dem größeren Ringabschnitt (11) und der benachbarten ersten Wulst (14) des Balgs (13) ein Tal (15) ausgebildet ist und bei der der Grat der ersten Wulst (14) mit seinem Innenumfang außerhalb des fiktiven Umfangs eines Kegelstumpfs (C) angeordnet ist, der gebildet wird, indem der Endbereich (11a) des größeren Ringabschnitts (11) an seiner mit de Balg (13) verbundenen Seite und der Grat der zweiten Wulst (16) miteinander verbunden werden, dadurch gekennzeichnet, daß der Außendurchmesser des Tals (15) zwischen der ersten Wulst (14) un dem größeren Ringabschnitt (11) kleiner ist als der Innendurchmesser des größeren Ringabschnitts (11) und daß der Abstand zwischen den Graten der ersten und der zweiten Wulst (14, 16) so klein ist, daß die beiden Wülste während Abwinklungen der Ausgangswelle (21) in gegenseitige Anlage geraten, wobei der Balg aus einem hochmolekularen Elastomer hergestellt ist.

2. Schutzkappe für ein Universalgelenk nach Anspruch 1, bei der der Grat der ersten Wulst (14) einen größeren Krümmungsradius als der der zweiten Wulst (16) aufweist.

3. Schutzkappe für ein Universalgelenk nach Anspruch 2, bei der der Grat der dritten Wulst (17) einen kleineren Krümmungsradius aufweist, als der der zweiten Wulst (16).

## Revendications

1. Gaine pour joint universel, dans laquelle des soufflets (13) comportant au moins trois plis (14, 16, 17) s'étendent entre une partie annulaire large (11) et une partie annulaire étroite (12), un creux ou vallée (15) étant formé entre ladite partie annulaire large (11) et la première partie haute adjacente (14) desdits soufflets (13), et dans laquelle le sommet dudit premier pli (14), a sa circonférence intérieure située à l'extérieur de la circonférence imaginaire d'un tronc de cône (C), formé en reliant la partie d'extrémité (11a) de ladite partie annulaire large (11), du côté relié auxdits soufflets (13), au sommet du pli (16), caractérisé en ce que le diamètre extérieur dudit creux (15) situé entre ledit pli (14) et ladite partie annulaire large (11) est inférieur au diamètre intérieur de ladite partie annulaire large (11) et en ce que la distance entre les sommets desdits premier et second plis (14, 16) est suffisamment faible pour qu'ils viennent en contact mutuel lors des débattements de l'arbre de sortie (21), lesdits soufflets (13) étant fabriqués en élastomère à haut poids moléculaire.

2. Gaine pour joint universel selon la revendication 1, dans laquelle le sommet dudit premier pli (14) présente un plus grand rayon de courbure que celui dudit second pli (16).

3. Gaine pour joint universel selon la revendication 2, dans laquelle le sommet dudit troisième pli (17) présente un rayon de courbure plus faible que celui dudit second pli (16).

Fig.1

11  11a  15  14  C  16  17  12

13

Fig.2

11  11a  14  16  21

12

14

23